# EUROPÄISCHE PATENTANMELDUNG

(11) **EP 4 411 321 A1**
(43) Veröffentlichungstag der Anmeldung: **07.08.2024**
(21) Anmeldenummer: 24152031.1
(22) Anmeldetag: 16.01.2024
(51) Int. Cl.: G01C 21/34

(54) **ELEKTROFAHRRAD UND EIN VERFAHREN ZUR ANZEIGE EINER NAVIGATIONSINFORMATION FÜR EIN ELEKTROFAHRRAD**

(30) Priorität: 31.01.2023 DE 102023200783
(71) Anmelder: Robert Bosch GmbH, 70442 Stuttgart (DE)
(72) Erfinder: Zeilinger, Moritz, 72639 Neuffen (DE); Prothmann, Holger, 72827 Wannweil (DE); Lind, Sebastian, 35657 Ramlösa (SE); Froehlich, Nils Sebastian, 72147 Nehren (DE)

(57) **Zusammenfassung**

Die Erfindung betrifft Elektrofahrrad mit einer Antriebseinheit und einer Energieversorgungseinheit zur Versorgung der Antriebseinheit mit Energie, mit einer Steuereinheit zur Steuerung oder Regelung des Elektrofahrrads und mit einer Navigationseinheit zur Ermittlung eines Satzes an Navigationsinformationen und/oder zur Anzeige einer Navigationsinformation, wobei die Steuereinheit des Elektrofahrrads zur Bereitstellung von Elektrofahrraddaten und/oder Betriebsdaten an die Navigationseinheit ausgebildet ist. Es wird vorgeschlagen, dass die Navigationseinheit derart ausgebildet ist, dass basierend auf den Elektrofahrraddaten und/oder den Betriebsdaten eine Navigationsinformation aus dem Satz an ermittelten Navigationsinformationen automatisch ausgewählt und angezeigt wird.

## Beschreibung

Die Erfindung betrifft ein Elektrofahrrad und ein Verfahren zur Anzeige einer Navigationsinformation für ein Elektrofahrrad

### Offenbarung der Erfindung

Die Erfindung betrifft Elektrofahrrad mit einer Antriebseinheit und einer Energieversorgungseinheit zur Versorgung der Antriebseinheit mit Energie, mit einer Steuereinheit zur Steuerung oder Regelung des Elektrofahrrads und mit einer Navigationseinheit zur Ermittlung eines Satzes an Navigationsinformationen und/oder zur Anzeige einer Navigationsinformation, wobei die Steuereinheit des Elektrofahrrads zur Bereitstellung von Elektrofahrraddaten und/oder Betriebsdaten an die Navigationseinheit ausgebildet ist. Es wird vorgeschlagen, dass die Navigationseinheit derart ausgebildet ist, dass basierend auf den Elektrofahrraddaten und/oder den Betriebsdaten eine Navigationsinformation aus dem Satz an ermittelten Navigationsinformationen automatisch ausgewählt und angezeigt wird. Vorteilhaft kann dadurch die Navigation optimiert werden.

Unter einem Elektrofahrrad soll im Zusammenhang dieser Anmeldung insbesondere ein Fahrrad verstanden, dass eine Antriebseinheit zur Unterstützung des Fahrers aufweist. Das Elektrofahrrad ist vorzugsweise als ein eBike, ein Pedelec, ein S-Pedelec, ein Lastenfahrrad, ein Klappfahrrad oder dergleichen ausgebildet. Die Antriebseinheit weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit der Energieversorgungseinheit zur Versorgung der Antriebseinheit mit Energie verbunden. Die Energieversorgungseinheit ist vorzugsweise als ein Akkupack ausgebildet und weist ein Akkugehäuse auf, das bevorzugt lösbar mit einem Rahmen des Fahrrads verbunden ist. Die Steuereinheit des Elektrofahrrads ist einer Elektronik zugeordnet. Die Elektronik umfasst vorzugsweise eine Sensoreinheit, wobei die Sensoreinheit beispielsweise Bewegungssensoren, Drehmomentsensoren, Geschwindigkeitssensoren, GPS-Sensoren, Magnetsensoren oder dergleichen aufweisen kann. Zudem umfasst die Elektronik insbesondere zumindest eine Kommunikationsschnittstelle zur drahtlosen Verbindung des Elektrofahrrads mit der Steuervorrichtung und/oder dem Server. Die Elektronik umfasst ferner bevorzugt eine Speichereinheit, wobei auf der Speichereinheit Elektrofahrraddaten und/oder Betriebsdaten gespeichert sind.

Bei den Elektrofahrraddaten handelt es sich dabei um Informationen hinsichtlich des Elektrofahrrads selbst. Die Elektrofahrraddaten umfassen beispielsweise einen Fahrradtyp. Der Fahrradtyp kann beispielswiese als ein Mountainbike, ein Cargobike, ein Citybike, ein S-Pedelec, oder dergleichen ausgebildet sein. Zudem können die Elektrofahrraddaten auch Informationen hinsichtlich der verbauten Komponenten am Elektrofahrrad umfassen.

Bei den Betriebsdaten handelt es sich um Informationen hinsichtlich des Betriebs des Elektrofahrrads. Die Betriebsdaten können beispielsweise Informationen über den Ladezustand der Energieversorgungseinheit umfassen. Die Betriebsdaten können auch Informationen hinsichtlich eines Verbindungszustands mit einem Anhänger umfassen.

Die Navigationseinheit kann beispielhaft als ein mobiles Endgerät, insbesondere als eine Smartwatch oder als ein Smartphone, oder als ein Boardcomputer des Elektrofahrrads ausgebildet sein. Die Navigationseinheit kann somit in das Elektrofahrrad integriert oder lösbar mit diesem verbindbar ausgebildet sein. Vorzugsweise weist das Elektrofahrrad und/oder die Navigationseinheit eine mechanische und/oder elektrische Schnittstelle zur mechanischen und/oder elektrischen Verbindung der Navigationseinheit mit dem Elektrofahrrad. Die Navigationseinheit umfasst vorzugsweise eine Anzeigeeinheit, beispielsweise ein insbesondere berührungsempfindliches Display, zur Anzeige der Navigationsinformation. Es ist ebenso denkbar, dass die Navigationsinformation auf einer Anzeige des Elektrofahrrads, beispielsweise auf einem Boardcomputer des Elektrofahrrads, angezeigt wird. Die Navigationseinheit umfasst vorzugsweise eine Recheneinheit und eine Speichereinheit, sodass die Navigationsinformation lokal ermittelbar ist. Alternativ oder zusätzlich umfasst die Navigationseinheit eine vorzugsweise drahtlose Kommunikationsschnittstelle, beispielsweise Bluetooth, WLAN oder eine Mobilfunk-Schnittstelle, über die die Navigationseinheit mit einem Rechennetzwerk, beispielsweise einem Server, verbindbar ist, wobei die Navigationsinformationen durch das Rechennetzwerk ermittelbar sind.

Unter einer Navigationsinformation soll im Zusammenhang dieser Anmeldung insbesondere eine Routenführung basierend auf mehreren Streckenabschnitten verstanden werden, die zur Führung des Fahrers während der Fahrt anzeigbar ist. Unterschiedliche Navigationsinformationen unterscheiden sich dabei insbesondere durch unterschiedliche Streckenabschnitte, die dem Fahrer beziehungsweise dem Benutzer anzeigbar sind. Die unterschiedlichen Navigationsinformationen entsprechen dabei unterschiedlich angezeigten Routen die sich in der Fahrzeit und zudem in der präferierten Geländewahl, beispielsweise Waldweg oder Straßen mit anderen Verkehrsteilnehmern, unterscheiden. Der Satz an Navigationsinformationen umfasst zumindest zwei Navigationsinformationen, vorzugsweise zumindest drei unterschiedliche Navigationsinformationen.

Des Weiteren wird vorgeschlagen, dass die Navigationseinheit derart ausgebildet ist, dass die anzuzeigende Navigationsinformation durch einen Benutzer änderbar ist. Vorteilhaftkann der Benutzer dadurch eine Route nach den eigenen Bedürfnissen planen. Das Elektrofahrrad und/oder die Navigationseinheit weist hierzu vorzugsweise ein Eingabeelement auf. Das Eingabeelement kann beispielsweise als ein Knopf, eine Tastatur oder ein berührungsempfindlicher Bildschirm ausgebildet sein.

Weiterhin wird vorgeschlagen, dass die Navigationseinheit derart ausgebildet ist, dass bei Änderung der Navigationsinformation durch den Benutzer ein Hinweis angezeigt wird. Vorteilhaft kann dadurch der Benutzer auf wichtige Eigenschaften der Navigationsinformationen hingewiesen werden. Der Hinweis kann beispielsweise als eine Empfehlung und/oder als ein Warnhinweis ausgebildet sein. Der Hinweis wird vorzugsweise derart angezeigt, dass eine Navigation nur durch eine Bestätigung, eine Betätigung oder eine andere Form der Ausblendung des Hinweises möglich ist.

Zudem wird vorgeschlagen, dass die Navigationseinheit derart ausgebildet ist, dass basierend auf den Betriebsdaten des Elektrofahrrads eine automatische Anpassung der Anzeige und/oder der Navigationsinformation erfolgt. Vorteilhaft kann dadurch der Benutzer in der Auswahl der Navigationsinformation unterstützt werden. Die automatische Anpassung der Anzeige basierend auf den Betriebsdaten erfolgt dabei vorzugsweise während eine Navigationsinformation angezeigt wird, also während der Fahrt. Bei den Betriebsdaten kann es sich beispielsweise auch eine Leistungsfähigkeit oder Einsatzfähigkeit der Antriebseinheit handeln. Bei einem Ausfall der Antriebseinheit können beispielsweise Streckenabschnitte mit einer hohen Steigung kaum befahren werden. Ebenfalls ist denkbar, dass das Elektrofahrrad eine Beschaffenheit der Straße oder einen Verschleißzustand der Räder ermittelt und als Betriebsdaten der Navigationseinheit bereitstellt.

Des Weiteren wird vorgeschlagen, dass die Navigationseinheit dazu ausgebildet, basierend auf den Betriebsdaten des Elektrofahrrads ein Hinweis angezeigt wird. Vorteilhaft kann dadurch der Fahrer auf das Vorliegen bestimmter Betriebsdaten hingewiesen werden.

Weiterhin wird vorgeschlagen, dass die Navigationseinheit mit einem Rechennetzwerk zur Importierung einer Navigationsinformation verbindbar ausgebildet ist. Insbesondere ist die Navigationseinheit dazu ausgebildet, dass bei Auswahl einer importierten Navigationsinformation ein Hinweis angezeigt wird. Vorteilhaft kann dadurch der Fahrer darauf hingewiesen werden, dass die importierte Navigationsinformation unabhängig von den Elektrofahrraddaten und/oder Betriebsdaten ermittelt wurde.

Des Weiteren betrifft die Erfindung ein Verfahren zur Anzeige einer Navigationsinformation für ein Elektrofahrrad mit einer Navigationseinheit, wobei in einem ersten Schritt durch die Navigationseinheit ein Satz insbesondere generischer Navigationsinformationen ermittelt wird, wobei in einem zweiten Schritt ein Kopplungsvorgang, insbesondere ein Pairing, zwischen dem Elektrofahrrad und der Navigationseinheit erfolgt, wobei in einem dritten Schritt durch die Navigationseinheit zumindest eine weitere insbesondere spezifische Navigationsinformation basierend auf Elektrofahrraddaten und/oder Betriebsdaten ermittelt wird. Vorteilhaft kann dadurch eine für das Elektrofahrrad spezifische Navigationsinformation ermittelt werden.

Weiterhin wird vorgeschlagen, dass in einem weiteren Schritt eine Auswahl einer Navigationsinformation durch den Benutzer erfolgt, wobei bei Auswahl einer spezifischen Navigationsinformation ein Hinweis angezeigt wird.

Zudem wird vorgeschlagen, dass in einem weiteren Schritt ein Entkopplungsvorgang stattfindet, wobei nach dem Entkopplungsvorgang die spezifischen Navigationsinformationen nicht mehr angezeigt werden und/oder nicht mehr durch den Benutzer auswählbar sind.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht eines Systems mit einem Elektrofahrrad und einer Navigationseinheit für das Elektrofahrrad;
- Fig. 2: ein Flussdiagramm mit einer möglichen Ausführungsform eines erfindungsgemäßen Verfahrens.

### Beschreibung der Ausführungsbeispiele

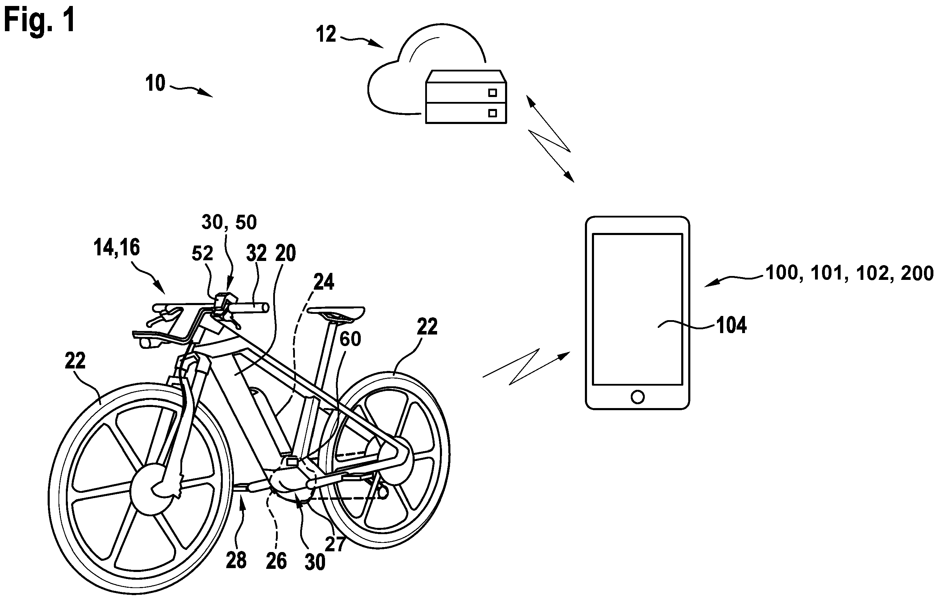

In Fig. 1 ist ein System 10 umfassend einen Server 12, ein mobiles Endgerät 100 und eine Fahrradeinheit 14 in Form eines Elektrofahrrads 16 in einer schematischen Ansicht gezeigt.

Das mobile Endgerät 100 ist beispielhaft als eine Steuervorrichtung 101 für die Fahrradeinheit 14 ausgebildet ist. Das Elektrofahrrad 16 ist beispielsweise als ein S-Pedelec ausgebildet, welches sich gegenüber normalen Pedelecs durch eine höhere Abriegelgeschwindigkeit unterscheidet. Derartige S-Pedelec unterliegen dabei rechtlich anderen Vorgaben wie normales Pedelecs, wodurch sie beispielsweise gewisse Waldwege oder Fahrradwege nicht befahren dürfen.

Das Elektrofahrrad 16 weist ein Gehäuse in Form eines Rahmens 20 bzw. eines Fahrradrahmens auf. Mit dem Rahmen 20 sind zwei Räder 22 verbunden. Zudem weist das Elektrofahrrad 16 eine Energieversorgungseinheit 24 in Form eines Akkupacks auf. Zudem weist das Elektrofahrrad 16 eine Antriebseinheit 26 auf, die einen Elektromotor bzw. Hilfsmotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über die Energieversorgungseinheit 24 mit Energie versorgt. Die Energieversorgungseinheit 24 kann von außen am Rahmen 20 befestigbar oder im Rahmen 20 integriert ausgebildet sein.

Das Elektrofahrrad 16 umfasst eine eine Steuereinheit umfassende Elektronik, die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf.

Die Elektronik und die Antriebseinheit 26 mit dem Elektromotor und der Tretkurbelwelle sind in einem mit dem Rahmen 20 verbundenen Antriebsgehäuse 27 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Elektronik gesteuert oder geregelt wird. Die Elektronik ist dazu ausgebildet, die Antriebseinheit derart anzusteuern, dass der Fahrer des Elektrofahrrads 16 beim Pedalieren unterstützt wird. Vorzugsweise ist die Steuereinheit durch den Fahrer bedienbar ausgebildet, sodass der Fahrer den Unterstützungsgrad einstellen kann. Das Elektrofahrrad weist beispielsweise einen leichten Unterstützungsmodus und einen starken Unterstützungsmodus, wobei die Antriebseinheit im starken Unterstützungsmodus eine höhere Unterstützung für den Fahrer bietet.

Das Elektrofahrrad 16 umfasst zudem ein Steuermodul 50, das an einem Lenker 32 des Elektrofahrrads 16 angeordnet ist. Alternativ ist auch eine Positionierung, beispielhaft innerhalb des Rahmens 20, vorzugsweise in einem Oberrohr des Rahmens 20, denkbar. Das Steuermodul 50 umfasst beispielhaft ein Gehäuse 52, in welchem eine Recheneinheit (nicht dargestellt), eine Speichereinheit (nicht dargestellt) und eine drahtlose Kommunikationsschnittstelle (nicht dargestellt) angeordnet ist. Das Steuermodul 50 ist beispielhaft über zumindest ein Kabel (nicht dargestellt) mit den elektrischen Fahrradkomponenten, insbesondere dem Akkupack 24 und der Antriebseinheit 26, verbunden. Die Kabel verlaufen dabei vorzugsweise verdeckt innerhalb des Rahmens 20. Alternativ oder zusätzlich ist auch eine drahtlose Verbindung mittels der Kommunikationsschnittstelle des Steuermoduls 50 denkbar. Die drahtlose Kommunikationsschnittstelle des Steuermoduls 50 ist beispielhaft als eine BLE (Bluetooth Low Energy) ausgebildet. Über die drahtlose Kommunikationsschnittstelle des Steuermoduls 50 ist das Elektrofahrrad 16 zum Austausch von Daten mit dem mobilen Endgerät 100 direkt verbindbar ausgebildet.

Die Elektronik umfasst zudem eine Lokalisierungskomponente 60. Die Lokalisierungskomponente 60 umfasst beispielhaft ein Gehäuse (nicht dargestellt), wobei in dem Gehäuse beispielhaft eine weitere drahtlose Kommunikationsschnittstelle und ein Ortsensor, der zur Erfassung einer Ortskenngröße ausgebildet ist, angeordnet ist. Der Ortssensor ist beispielhaft als ein GNSS-Empfänger ausgebildet. Die Lokalisierungskomponente 60 ist beispielhaft über ein Kabel mit dem Steuermodul 50 verbunden, wobei auch eine drahtlose Verbindung mittels der Kommunikationsschnittstellen denkbar ist. Die Lokalisierungskomponente 60 ist beispielhaft im Rahmen 20 des Elektrofahrrads 16, insbesondere im Antriebsgehäuse 27 des Elektrofahrrads 16 angeordnet. Die weitere drahtlose Kommunikationsschnittstelle ist beispielhaft als eine Mobilfunkschnittstelle in Form einer LTE Schnittstelle ausgebildet. Die weitere Kommunikationsschnittstelle ist somit nicht direkt mit dem mobilen Endgerät 100 verbindbar. Die Verbindung kann allerdings über einen Funkmast erfolgen. Die Lokalisierungskomponente 60 ist dabei als optionale Fahrradkomponente ausgebildet. Das bedeutet, dass das Elektrofahrrad 16 mit dem Steuermodul 50 allein benutzbar ist und die Lokalisierungskomponente weitere Funktionen ermöglicht, beispielsweise einen verbesserten Diebstahlschutz.

In der Speichereinheit der Elektronik können Elektrofahrraddaten und/oder Betriebsdaten des Elektrofahrrads 16 gespeichert sein. Die Elektrofahrraddaten sind beispielhaft in Form eines Fahrradtyps gespeichert, wobei der Fahrradtyp als ein S-Pedelec ausgebildet ist. Die Betriebsdaten werden während der Benutzung des Elektrofahrrads 16 durch die Steuereinheit des Elektrofahrrads 16 ermittelt und umfassen beispielhaft eine Geschwindigkeit des Elektrofahrrads 16. Beispielhaft sind in der Speichereinheit weitere Informationen hinsichtlich der verbauten Fahrradkomponenten, eine Fahrrad ID und eine Nutzerinformationen in Form von bevorzugten Einsatzorten des Elektrofahrrads 16 hinterlegt.

Zudem umfasst das Elektrofahrrad 16 eine Bedieneinheit 30 zur Bedienung des Elektrofahrrads 16. Die Bedieneinheit 30 ist an dem Lenker 32 des Elektrofahrrads 16 angeordnet. Die Bedieneinheit 30 wird beispielhaft durch das Steuermodul 50 gebildet. Die Bedieneinheit 30 weist beispielhaft einen nicht näher dargestellten Ein/Aus-Schalter auf, wobei mittels einer Betätigung des Schalters das Elektrofahrrad 16, insbesondere die Antriebseinheit 26, aktivierbar ausgebildet ist. Zudem ist die Elektronik mittels der Bedieneinheit 30 ansteuerbar ausgebildet, beispielsweise ist mittels einer Bedienung der Bedieneinheit 30 eine Auswahl eines Unterstützungsmodus des Elektrofahrrads 16 möglich. Das Steuermodul 50 kann zudem eine nicht dargestellte Anzeigeeinheit zur Anzeige von Betriebsdaten oder anderer Informationen aufweisen, die durch die Steuereinheit des Elektrofahrrads 16 oder die Steuervorrichtung 101 bereitgestellt werden.

Die Steuervorrichtung 101 ist beispielhaft als ein Smartphone 102 ausgebildet. Die Steuervorrichtung 101 umfasst eine Anzeigeeinheit 104, die zur Anzeige von Informationen ausgebildet ist. Die Anzeigeeinheit 104 ist beispielhaft als ein berührungsempfindlicher Bildschirm ausgebildet, sodass die Steuervorrichtung 101 mittels einer Betätigung beziehungsweise einer Berührung der Anzeigeeinheit 104 bedienbar und/oder steuerbar ist.

Die Steuervorrichtung 101 weist beispielhaft ein Betriebssystem auf, das zur Ausführung von Anwendungssoftware (App) ausgebildet ist. Die Steuervorrichtung 101 weist zumindest eine Fahrrad-App auf, die zur Anzeige von Betriebsdaten des Elektrofahrrads 16 und/oder zur Steuerung des Elektrofahrrads 16 ausgebildet ist.

Die Steuervorrichtung 101 weist zumindest eine kurzreichweitige Kommunikationsschnittstelle auf, die zu der kurzreichweitigen Kommunikationsschnittstelle des Elektrofahrrads 16 korrespondiert. Die kurzreichweitige Kommunikationsschnittstelle ist beispielhaft als eine Bluetooth Schnittstelle ausgebildet. Die Steuervorrichtung 101 kann abhängig oder unabhängig von der Fahrrad-App eine Verbindung mit dem Elektrofahrrad 16 erstellen. Diese Verbindung erfolgt beispielhaft über einen Bluetooth Pairing Prozess. Durch den Pairing Prozess werden die Steuervorrichtung 101 und das Elektrofahrrad 16 miteinander gekoppelt und verbunden. Wird die Steuervorrichtung 101 von dem Elektrofahrrad 16 physisch getrennt, erfolgt auch eine Trennung der drahtlosen Kommunikation, sie verbleiben allerdings im gekoppelten Zustand.

Zudem umfasst die Steuervorrichtung 101 zumindest eine langreichweitige Kommunikationsschnittstelle zur drahtlosen Kommunikation mit dem Server 12. Die langreichweitige Kommunikationsschnittstelle ist beispielhaft als eine 5G-Schnittstelle ausgebildet.

Das System 100 umfasst zudem eine Navigationseinheit 200. Die Navigationseinheit 200 ist beispielhaft der Steuervorrichtung 101, insbesondere dem Smartphone 102, zugeordnet. Alternativ oder zusätzlich ist allerdings ebenso denkbar, dass die Navigationseinheit 200 teilweise oder vollständig dem Elektrofahrrad 16 zugeordnet beziehungsweise in das Elektrofahrrad 16 integriert ist. Die Navigationseinheit 200 ist zur Ermittlung eines Satzes an Navigationsinformationen und zur Anzeige einer der Navigationsinformationen ausgebildet, wobei die Ermittlung basierend auf den Elektrofahrraddaten erfolgt. Die Anzeige der Navigationsinformation, die die Routeninformation umfasst, erfolgt beispielhaft auf der Anzeigeeinheit 104 der Steuervorrichtung 101. Alternativ oder zusätzlich wäre ebenso denkbar, dass die ermittelte Navigationsinformation dem Steuermodul 50 des Elektrofahrrads 16 bereitgestellt wird und auf einer Anzeigeeinheit des Elektrofahrrads 16 angezeigt wird.

Die Ermittlung des Satzes an Navigationsinformationen erfolgt beispielhaft basierend auf Elektrofahrraddaten des Elektrofahrrads 16, die der Steuervorrichtung 101 über die drahtlose Kommunikationsschnittstelle bereitgestellt werden. Die Berechnung der Navigationsinformation erfolgt beispielsweise auf dem Server 12, welcher wiederum die dafür notwendigen Daten von der Steuervorrichtung 101 bereitgestellt wird. Alternativ wäre ebenso denkbar, dass die Berechnung der Navigationsinformation durch das Elektrofahrrad 16 oder durch die Steuervorrichtung 101 erfolgt.

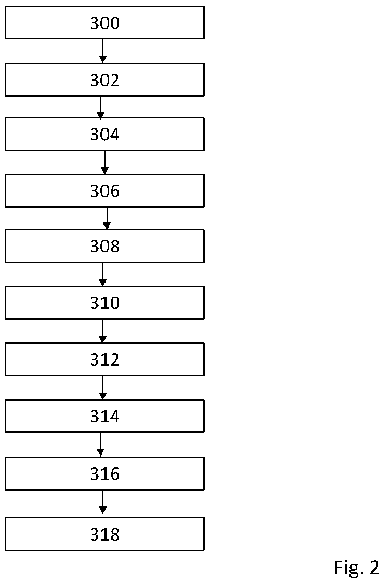

In Fig. 2 ist in einem Flussdiagramm ein beispielhaftes Verfahren zur Ermittlung eines Satzes von Navigationsinformationen gezeigt.

In einem ersten Schritt 300 wird auf der Steuervorrichtung 101 ein Applikationssoftware installiert. Die Applikationssoftware ist beispielhaft als eine Fahrrad-App ausgebildet. Die Applikationssoftware ist dabei der Navigationseinheit 200 zugeordnet, sodass durch die Applikationssoftware und die Steuervorrichtung 101 ein Benutzer ein Satz Navigationsinformationen ermitteln lassen kann. Die Ermittlung erfolgt dabei beispielhaft speziell für Fahrradrouten, die Routen sind dabei aber nicht auf spezifische Fahrräder eingeschränkt und somit für Fahrräder zunächst generisch. Wird beispielhaft eine Routenanfrage gestellt, wird diese dem Server 12 weitergeleitet, wobei der Server 12 für diese einzelne Anfrage mehrere Routen ermittelt und diese als Satz Navigationsinformationen der Steuervorrichtung 101 bereitstellt. Der Benutzer kann dann eine vorgeschlagene Navigationsinformation übernehmen oder eine andere aus dem Satz auswählen.

In einem zweiten Schritt 302 erfolgt ein Kopplungsvorgang zwischen dem Elektrofahrrad 16 und der Steuervorrichtung 102 beziehungsweise der Navigationseinheit 200. Der Kopplungsvorgang erfolgt über die Bluetooth Kommunikationsschnittstelle in Form eines Pairing Prozesses. Der Kopplungsvorgang kann über das Elektrofahrrad 16 und/oder über die Navigationseinheit 200 initiiert werden. Im Zuge des Kopplungsvorgangs werden Informationen, insbesondere Identitätsinformationen und/oder Elektrofahrraddaten, ausgetauscht.

Im gekoppelten und zum Informationsaustausch verbundenen Zustand werden der Navigationseinheit 200 Elektrofahrraddaten in einem Schritt 304 bereitgestellt. Die Elektrofahrraddaten umfassen dabei die Information, dass es sich bei dem Elektrofahrrad 16 um eine Fahrradeinheit 14 handelt, die nicht beliebig auf allen Straßen oder Wegen fahren kann und/oder darf. Bei einem S-Pedelec können beispielsweise bestimmte Wege gesperrt sein und werden somit zur Ermittlung der Navigationsinformation nicht herangezogen.

in einem Schritt 306 erfolgte eine Eingabe eines Benutzers der Navigationseinheit 200 hinsichtlich eines Planungswunsches für eine Strecke, diese kann beispielsweise durch das Smartphone in Form einer Eingabe eines Startpunkts und eines Zielpunkts erfolgen.

In einem Schritt 308 werden die Informationen hinsichtlich der Nutzereingabe und die durch das Elektrofahrrad 16 bereitgestellten Elektrofahrraddaten an den Server 12 übermittelt, der basierend auf diesen Daten weitere Navigationsinformationen ermittelt und diese der Navigationseinheit 200 bereitstellt. Die weiteren Navigationsinformation sind dabei im Gegensatz von den zuvor ermittelten Navigationsinformationen nicht mehr generisch sondern spezifisch für das mit der Navigationseinheit 200 gekoppelte Elektrofahrrad 16. Die generischen Routeninformationen bleiben allerdings für den Benutzer auswählbar.

In einem Schritt 310 wird basierend auf den Elektrofahrraddaten ermittelte weitere Navigationsinformation auf dem Smartphone 102 beziehungsweise auf der Navigationseinheit 200 automatisch angezeigt. Dabei unterscheidet sich die weitere Navigationsinformation von dem Satz Navigationsinformationen.

In einem Schritt 312 wird seitens des Benutzers nun eine andere Navigationsinformation ausgewählt, die nicht basierend auf den Elektrofahrraddaten ermittelt wurde und auf der Navigationseinheit 200 angezeigt.

In einem Schritt 314 wird daraufhin ein Hinweis eingeblendet, der den Benutzer direkt oder indirekt darauf hinweist, dass die ausgewählte und angezeigte Navigationsinformation nicht basierend auf den Elektrofahrraddaten und/oder Betriebsdaten ermittelt wurde. Beispielsweise kann der Hinweis angezeigt werden, dass das Fahrrad nicht oder nur erschwert auf dieser Route gefahren werden kann oder darf.

Vorzugsweise wird der Hinweis derart platziert, dass dieser nicht übersehen werden kann, beispielsweise direkt auf einer Karte oder auf einem Cursor auf der Karte.

In einem Schritt 316 wird die Verbindung zwischen der Steuervorrichtung 101, insbesondere der Navigationseinheit 200, und dem Elektrofahrrad 16 unterbrochen, wobei die Navigationseinheit 200 und das Elektrofahrrad 16 im gekoppelten Zustand bleiben. In diesem Zustand wird weiterhin die weitere oder spezielle Navigationsinformation angezeigt.

In einem Schritt 318 wird die Kopplung zwischen dem Elektrofahrrad 16 und der Navigationseinheit 200 aufgelöst. In diesem Fall werden die weiteren oder speziellen Navigationsinformation gelöscht oder inaktiv geschaltet, sodass dem Benutzer der Navigationseinheit 200 nur noch der Satz Navigationsinformationen beziehungsweise die generischen Navigationsinformationen angezeigt oder zur Auswahl gestellt werden.

## Patentansprüche

1. Elektrofahrrad mit einer Antriebseinheit (26) und einer Energieversorgungseinheit (24) zur Versorgung der Antriebseinheit (26) mit Energie, mit einer Steuereinheit zur Steuerung oder Regelung des Elektrofahrrads (16) und mit einer Navigationseinheit (200) zur Ermittlung eines Satzes an Navigationsinformationen und/oder zur Anzeige einer Navigationsinformation, wobei die Steuereinheit des Elektrofahrrads (16) zur Bereitstellung von Elektrofahrraddaten und/oder Betriebsdaten an die Navigationseinheit (200) ausgebildet ist,
**dadurch gekennzeichnet, dass**
die Navigationseinheit (200) derart ausgebildet ist, dass basierend auf den Elektrofahrraddaten und/oder den Betriebsdaten eine Navigationsinformation aus dem Satz an ermittelten Navigationsinformationen automatisch ausgewählt und angezeigt wird.

2. Elektrofahrrad nach Anspruch 1, **dadurch gekennzeichnet, dass** die Navigationseinheit (200) derart ausgebildet ist, dass die anzuzeigende Navigationsinformation durch einen Benutzer änderbar ist.

3. Elektrofahrrad nach einem der vorhergehenden Ansprüche, **dadurch gekennzeichnet, dass** die Navigationseinheit (200) derart ausgebildet ist, dass bei Änderung der Navigationsinformation durch den Benutzer ein Hinweis angezeigt wird.

4. Elektrofahrrad nach einem der vorhergehenden Ansprüche, **dadurch gekennzeichnet, dass** die Navigationseinheit (200) derart ausgebildet ist, dass basierend auf den Betriebsdaten des Elektrofahrrads (16) eine automatische Anpassung der Anzeige und/oder der Navigationsinformation erfolgt.

5. Elektrofahrrad nach einem der vorhergehenden Ansprüche, **dadurch gekennzeichnet, dass** die Navigationseinheit (200) dazu ausgebildet, basierend auf den Betriebsdaten des Elektrofahrrads (200) ein Hinweis angezeigt wird.

6. Elektrofahrrad nach einem der vorhergehenden Ansprüche, **dadurch gekennzeichnet, dass** die Navigationseinheit (200) mit einem Rechennetzwerk zur Importierung einer Navigationsinformation verbindbar ausgebildet ist.

7. Elektrofahrrad nach einem der Anspruch 6, **dadurch gekennzeichnet, dass** die Navigationseinheit (200) dazu ausgebildet ist, dass bei Auswahl einer importierten Navigationsinformation ein Hinweis angezeigt wird.

8. Verfahren zur Anzeige einer Navigationsinformation für ein Elektrofahrrad (16) mit einer Navigationseinheit (200), wobei in einem ersten Schritt durch die Navigationseinheit (200) ein Satz insbesondere generischer Navigationsinformationen ermittelt wird, wobei in einem zweiten Schritt ein Kopplungsvorgang, insbesondere ein Pairing, zwischen dem Elektrofahrrad (16) und der Navigationseinheit (200) erfolgt, wobei in einem dritten Schritt durch die Navigationseinheit (200) zumindest eine weitere spezifische Navigationsinformation basierend auf Elektrofahrraddaten und/oder Betriebsdaten ermittelt wird.

9. Verfahren nach Anspruch 8, **dadurch gekennzeichnet, dass** in einem weiteren Schritt eine Auswahl einer Navigationsinformation durch den Benutzer erfolgt, wobei bei Auswahl einer generischen Navigationsinformation ein Hinweis angezeigt wird.

10. Verfahren nach Anspruch 8 oder 9, **dadurch gekennzeichnet, dass** in einem weiteren Schritt ein Entkopplungsvorgang stattfindet, wobei nach dem Entkopplungsvorgang die spezifischen Navigationsinformationen nicht mehr angezeigt werden und/oder nicht mehr durch den Benutzer auswählbar sind.
